# EUROPÄISCHE PATENTSCHRIFT

(11) **EP 2 338 215 B1**
(45) Veröffentlichungstag und Bekanntmachung des Hinweises auf die Patenterteilung: **05.07.2017**
(21) Anmeldenummer: 09782765.3
(22) Anmeldetag: 08.09.2009
(51) Int. Cl.: H02K 1/27, H02K 1/28

(54) **LAMELLENPAKET EINES ROTORS EINER ELEKTRISCHEN MASCHINE**
LAMINATED CORE OF A ROTOR OF AN ELECTRICAL MACHINE
PAQUET DE TÔLES D'UN ROTOR D'UN MOTEUR ÉLECTRIQUE

(30) Priorität: 23.10.2008 DE 102008043138
(43) Veröffentlichungstag der Anmeldung: 29.06.2011
(73) Patentinhaber: Robert Bosch GmbH, 70442 Stuttgart (DE)
(72) Erfinder: SEIDEL, Maik, 31177 Harsum (DE); PLOEGER, Armin, 31139 Hildesheim (DE); HOFMEISTER, Anja, 71272 Renningen (DE); BEKAVAC, Miro, 70825 Korntal-Muenchingen (DE); GREMMEL, Daniel, 31249 Hohenhameln (DE); MINNERMANN, Markus, 30559 Hannover (DE)
(86) Internationale Anmeldenummer: PCT/EP2009/061631
(87) Internationale Veröffentlichungsnummer: WO 2010/046177

(56) Entgegenhaltungen:
- EP-A1- 1 801 955
- EP-A2- 1 983 634
- WO-A2-2007/004009
- DE-A1-102007 029 719

## Beschreibung

Die Erfindung betrifft ein Lamellenpaket gemäß dem Oberbegriff des Anspruchs 1.

### Stand der Technik

Lamellenpakete von Rotoren einer elektrischen Maschine bestehen aus Einzelblechen oder Einzellamellen, die zum Beispiel durch Stanzpaketieren oder Schweißen miteinander verbunden sind. Um ein mögliches Aufblättern der Lamellenpakete beim Fügen der Pakete oder während des Betriebes zu verhindern, ist als Stärkung des Lamellenendes in der Offenlegungsschrift DE 27 27 490 A1 eine Endlamelle beschrieben, die aus mindestens zwei Lamellen besteht, die miteinander verschweißt sind.

In einer Untergruppe von elektrischen Maschinen sind Permanentmagnete in die Lamellenpakete von Rotoren eingesetzt, die, wie zum Beispiel in der Offenlegungsschrift DE 103 49 442 A1 beschrieben, durch den Einsatz einer Backlackschicht in den Lamellenpaketen befestigt sind. Die DE102007029719 und die EP1983634 sind weitere Druckschriften die zum Stand der Technik gehören.

### Offenbarung der Erfindung

Die erfindungsgemäße Vorrichtung sieht vor ein Lamellenpaket eines Rotors einer elektrischen Maschine mit einer Endlamelle so zu gestalten, dass einerseits das Lamellenpaket gegen ein mögliches Auffächern gesichert ist, und andererseits die im Lamellenpaket eingesetzten Permanentmagnete durch die Endlamelle befestigt sind.

Vorteilhaft gegenüber dem Stand der Technik ist die Ausführung der Endlamelle als ein Bauteil. Durch diese Ausführung kann möglicherweise auf Schweißnähte am äußeren Rand der Endlamelle zum Verbinden der Einzellamellen teilweise oder ganz verzichtet werden, was sich positiv auf die Eigenschaften der elektrischen Maschine auswirkt, da bei innenlaufenden Rotoren die Wirkungsgradverluste verringert werden.

Ein weiterer Vorteil gegenüber dem Stand der Technik ist die Möglichkeit, die Magnete, durch an die Endlamelle angeformte Laschen, im Lamellenpaket zu fixieren.

Die erfindungsgemäße Vorrichtung mit den Merkmalen des unabhängigen Anspruchs hat den Vorteil, dass Lamellenpakete aus Einzellamellen im Gegensatz zu Vollmaterial zur Verringerung von Wirbelströmen beitragen. Zudem stabilisiert die Endlamelle das Lamellenpaket mit den in Ausnehmungen eingreifenden Laschen. Die Laschen greifen axial nach innen in die Ausnehmungen ein. Diese axial verstärkte Verbindung sorgt für ein verwindungssteiferes Lamellenpaket und verhindert ein Auffächern einzelner Lamellen. Die durch die Erfindung stabilisierten Lamellenpakete weisen bessere Transport- sowie Betriebseigenschaften auf. Des Weiteren verringern sich durch den stabileren Verbund des Lamellenpakets die Montagekräfte der Lamellenpakete auf den Rotorträger, was zu einer Vereinfachung des Fügeprozesses und damit zu einer kostengünstigeren und prozeßsichereren Montage führt.

Durch die in den abhängigen Ansprüchen aufgeführten Maßnahmen sind vorteilhafte Weiterbildungen und Verbesserungen der im unabhängigen Anspruch angegebenen Vorrichtung möglich.

Die erfindungsgemäße Ausführung der Endlamelle bietet den Vorteil, dass die Endlamelle sowohl einseitig als auch beidseitig an das Lamellenpaket gefügt werden kann, wobei die Montagereihenfolge der Lamellenpakete mit den Magneten abhängig von der einseitigen oder zweiseitigen Anbringung von den Endlamellen ist.

Eine Ausführungsform des Lamellenpakets, bei dem an beiden Seiten jeweils eine Endlamelle vorgesehen ist, sieht vor, dass die in die Ausnehmung eingreifenden Laschen der beiden Endlamellen auf einer Seite der Ausnehmung zwischen dem gefügten Magneten und einer Wand des Lamellenpakets angeordnet sind. Vorteilhaft an dieser Ausführungsform ist, dass sich die zur Innenseite der Ausnehmung befindlichen Lasche beim Fügen des Magneten nicht aufbiegt, wenn der Magnet in Biegerichtung der Lasche eingeschoben wird.

Eine weitere Ausführungsform des Lamellenpakets, mit an beiden Seiten vorgesehenden Endlamellen, fixiert vorteilhafter Weise den Magneten auf beiden Seiten der Ausnehmung. Dies wird erreicht, indem eine erste Lasche einer ersten Endlamelle derart gebogen ist, dass die ersten Lasche zu einer ersten Wand der Ausnehmung angeordnet ist und eine zweite Lasche einer zweiten Endlamelle derart gebogen ist, dass die zweite Lasche zu einer der ersten Wand gegenüberliegenden Wand angeordnet ist.

Für eine Vielzahl von Anwendungen kann es vorteilhaft sein, dass die Laschen der Endlamellen, die zwischen zwei Stegen angeordnet sind, nicht nur über ein radial innenliegendes Joch der Endlamelle miteinander verbunden sind, sondern zusätzlich noch über einen radial außenliegenden Träger. Die Gestaltung der Endlamelle mit oder ohne Träger sorgt je nach Einsatz und Ausgestaltung der Endlamelle für Vorteile im Spannungsverlauf innerhalb der Lamelle. Dieses kann sich positiv auf die Fertigungsqualität der Lamellenpakete und auf die elektrischen Eigenschaften der elektrischen Maschine auswirken.

Besonders günstig ist die gleiche Anzahl der Laschen der Endlamellen mit der Anzahl von Ausnehmungen der Einzellamellen und der in Umfangsrichtung gleichen Verteilung der Laschen und der Ausnehmungen (auch Magnettaschen genannt). Die Positionierung der Laschen an den Ausnehmungen ermöglicht es, dass in jeder Magnettasche ein Magnet abhängig von der Ausführungsform durch eine oder zwei Laschen in Position gehalten werden kann.

Aus wirtschaftlichen Gründen ist es vorteilhaft die Endlammelle symmetrisch auszubilden. Dies vereinfacht die Fertigung und ermöglicht eine variable Montage der Endlamellen auf die Einzellamellen. Mit symmetrischen Endlamellen besteht zudem die Möglichkeit der beidseitigen Montage an das Lamellenpaket mit der gleichen Bauform. Die ähnlichen Geometrien der Endlamelle und der Einzellamellen sind vorteilhaft für die Fertigung der Bauteile in Bezug auf Wechselteile und Werkzeuge und ermöglichen eine Fertigung auf der gleichen Fertigungslinie. Des Weiteren kann auf Zusatzbauteile verzichtet werden, wenn die Laschen an den Endlammellen einstückig angeformt sind. Die Endlamelle lässt sich zum Beispiel per Stanzverfahren oder Laserschneiden herstellen und besteht vorteilhafter Weise aus dem gleichen Material wie die Einzellamellen des Lamellenpakets. Alternativ können sich je nach Anforderung die Materialien der Endlamelle und Einzellamellen unterscheiden.

Besonders günstig ist eine elastisch-plastische Verformbarkeit der Laschen der Endlamelle. Nach dem Biegen der Lasche und dem Fügen des Magneten entsteht in der Ausnehmung eine Klemmkraft an der Wirkfläche zwischen der Lasche und dem Magneten, die zu einem festeren Verbund zwischen den beiden Bauteilen führt. Durch die Klemmkraft können je nach Anwendungsfall zusätzliche Fixierungen der Magnete in den Ausnehmungen wegfallen, wodurch die Herstellungskosten verringert werden. Zudem werden die Magnete in den Ausnehmungen durch die Laschen gehalten, weil Fertigungstoleranzen der Magnete und der Ausnehmungen durch ein Zurückfedern der Laschen ausgeglichen werden.

Von besonderem Vorteil ist eine Ausführungsform der erfindungsgemäßen Vorrichtung, bei der die Laschen der Endlamelle nach dem Fügen der Endlamelle auf das Lamellenpaket (bestehend aus den Einzellamellen) in die Ausnehmungen gebogen sind. Anschließend ist der Magnet in die Ausnehmung zu fügen. Mögliche Beschädigungen der Magnete beim Fügen in die Ausnehmungen sind durch die vorgebogenen Laschen nahezu ausgeschlossen.

Die vorteilhafte Gestaltung der Erfindung erlaubt es je nach Anforderung und Einsatzgebiet die Montage der Endlamellen mit den Einzellamellen entweder durch Schweißen oder durch Stanzpaketieren umzusetzen.

Weitere Vorteile und vorteilhafte Ausgestaltungen des Gegenstands der Erfindung sind in der Beschreibung, den Zeichnungen und den Ansprüchen entnehmbar.

### Kurze Beschreibung der Zeichnung

Ausführungsbeispiele der Erfindung sind in den Zeichnungen dargestellt und in der nachfolgenden Beschreibung näher erläutert.

Es zeigen:
Figur 1: Eine perspektivische Darstellung eines Lamellenpakets;
Figur 2: Eine Draufsicht eines Ausschnitts einer Einzellamelle und einer Endlamelle;
Figur 3: Eine Draufsicht eines Ausschnitts einer ersten Ausführungsform einer Endlamelle;
Figur 4 a): Eine Draufsicht eines Ausschnitts einer zweiten Ausführungsform einer Endlamelle;

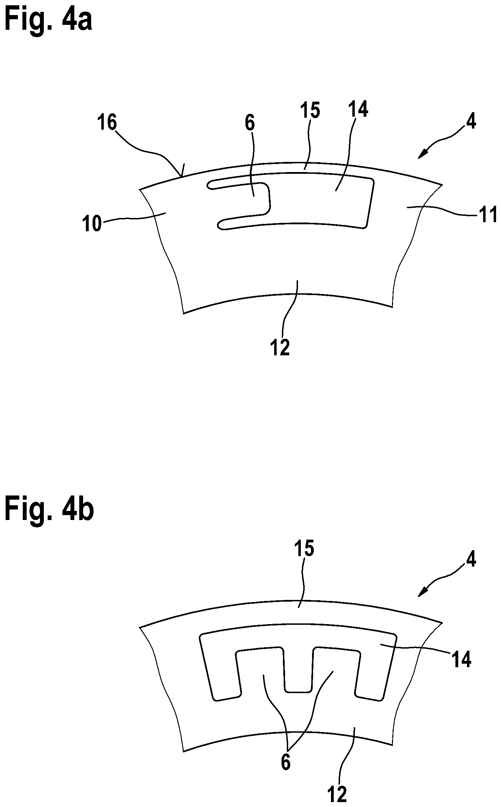

Figur 4 b): Eine Draufsicht eines Ausschnitts einer dritten Ausführungsform einer Endlamelle;

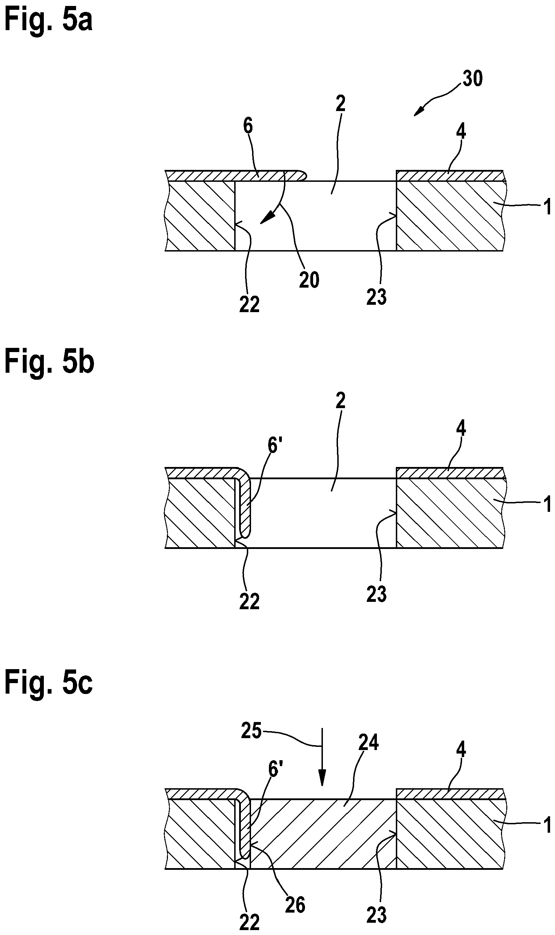

Figur 5 a) bis c): Schematische Darstellungen einer ersten Ausführungsform eines Lamellenpakets mit einseitiger Endlamelle;

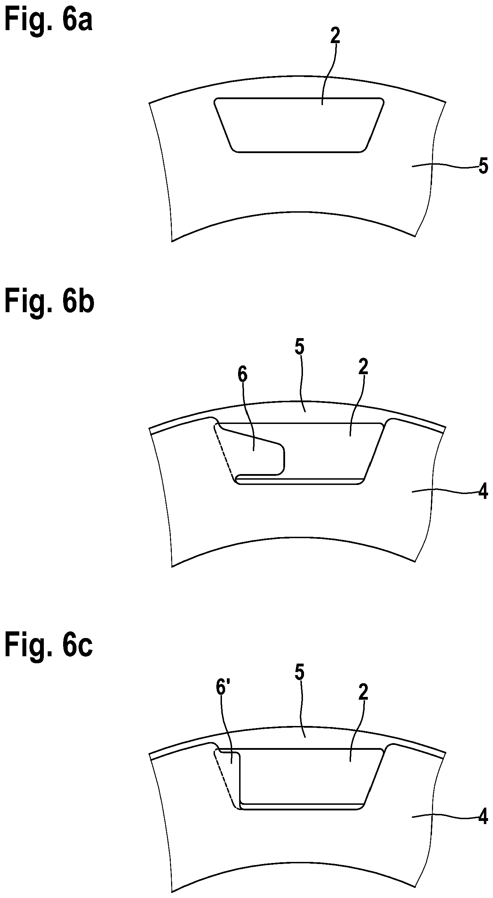

Figur 6 a) bis c): Seitenansicht der ersten Ausführungsform eines Lamellenpakets mit einseitiger Endlamelle;

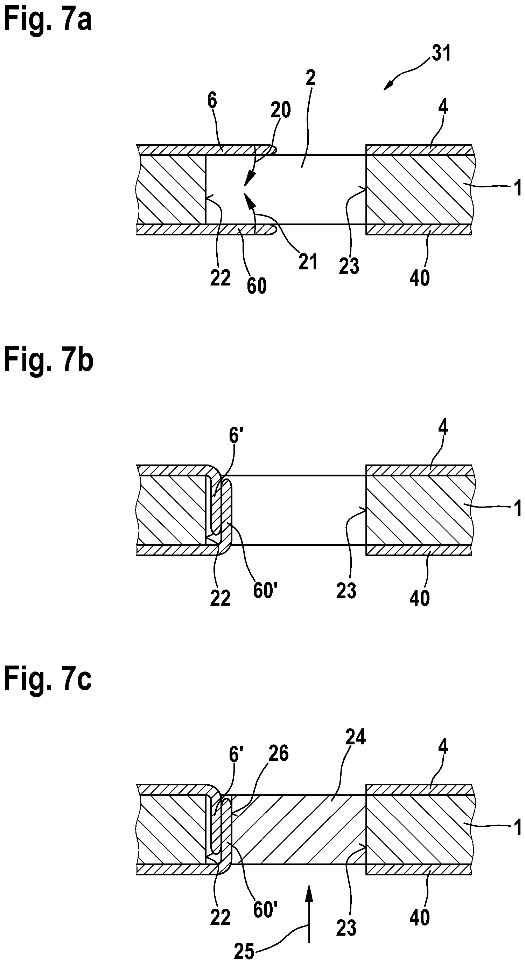

Figur 7 a) bis c): Schematische Darstellungen einer zweiten Ausführungsform eines Lamellenpakets mit beidseitiger Endlamelle;

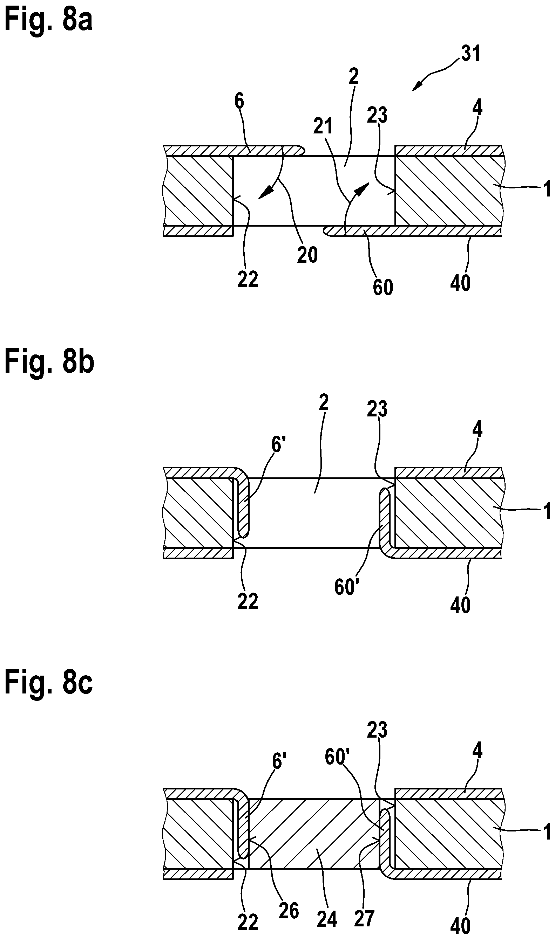

Figur 8 a) bis c): Schematische Darstellungen einer vierten Ausführungsform eines Lamellenpakets mit beidseitiger Endlamelle.

### Ausführungsformen der Erfindung

Die Erfindung ist anhand der beigefügten Zeichnungen dargestellt und wird in der nachfolgenden Beschreibung näher erläutert.

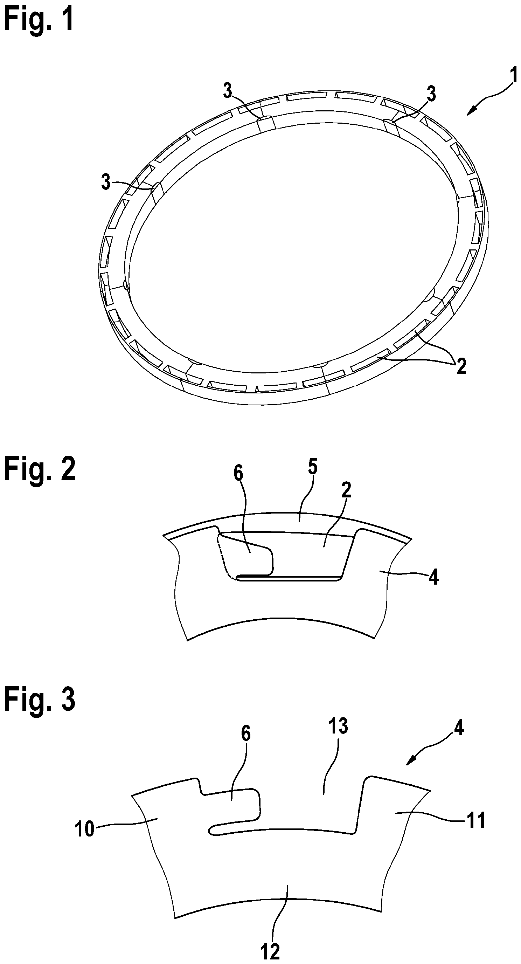

Fig. 1 zeigt ein Lamellenpaket 1, wie es bei Rotoren von elektrischen Maschinen, insbesondere von Hybridfahrzeugen, zum Einsatz kommt. Üblicherweise werden ein oder mehrere Lamellenpakete 1 auf einen Rotorträger aufgepresst oder aufgeschrumpft. Alternativ können die Lamellenpakete 1 auch formschlüssig auf den Rotorträger gefügt werden. Das Lamellenpaket 1 weist in Umfangsrichtung verteilt Ausnehmungen 2 auf, die das Lamellenpaket 1 axial zur Rotorachse (nicht dargestellt) durchlaufen. Diese Ausnehmungen 2 werden auch als Magnettaschen bezeichnet und dienen zur Aufnahme von Magneten 24 (Fig. 5). In einer bevorzugten Ausführungsform weist das Lamellenpaket 1 vierundzwanzig Ausnehmungen 2 auf, in der die Magnete 24 aufgenommen werden können. Je nach Anwendung und Größe des Rotors kann die Anzahl der Ausnehmungen 2 variieren. Das Lamellenpaket 1 ist in der hier gezeigten Ausführungsform durch Schweißnähte 3 am inneren Durchmesser zusammengehalten. Eine weitere Möglichkeit zur Verbindung des Lamellenpakets 1 bietet das Stanzpaketieren und/oder das Laserschweißen am Innen- und/oder Außendurchmesser.

In Fig. 2 ist ein Ausschnitt einer ersten Ausführungsform einer Endlamelle 4 und einer Einzellamelle 5 des Lamellenpakets 1 in axialer Draufsicht dargestellt. Die Endlamelle 4 ist vor der Einzellamelle 5 des Lamellenpakets 1 angeordnet und es ist eine Lasche 6 dargestellt, die vor der Ausnehmung 2 des Lamellenpakets 1 angeordnet ist. Die Form der Lasche 6 ist bevorzugt rechteckig und ist an der freiliegenden Seite der Lasche 6 abgerundet. Das Maß der Länge der Lasche 6 entspricht bevorzugt der axialen Tiefe der Ausnehmung 2 des Lamellenpakets 1. Die Form und die Länge können je nach Anwendungsfall variieren. Die Befestigung der Endlamelle 4 am Lamellenpaket 1 kann zum Beispiel wie in Fig. 1 gezeigt über eine Schweißnaht 3 am inneren Durchmesser, oder in hier nicht dargestellter Weise, über Stanzpaketieren ausgeführt sein.

Ein Ausschnitt der ersten Ausführungsform der Endlamelle 4 ist in Fig. 3 dargestellt. Die Lasche 6 der Endlamelle 4 ist einstückig an einem Steg 10 angeformt und ragt in einen Lamellenausschnitt 13 der Endlamelle 4. Der Steg 10 ist über ein radial innenliegendes Joch 12 mit einem weiteren Steg 11 verbunden.

Ein Ausschnitt einer zweiten Ausführungsform der Endlamelle 4 ist in Fig. 4 a) dargestellt. Der Ausschnitt zeigt die Endlamelle 4 mit der Lasche 6, die einstückig an der Endlamelle 4 angeformt ist. Die Lasche 6 befindet sich in ungebogenem Zustand in einem Lamellenausschnitt 14 der Endlamelle 4. Die Ränder des Lamellenausschnitts 14 sind radial innenliegend von einem Joch 12 und radial außenliegend am Außenumfang 16 von einem Träger 15 gebildet. In Umfangsrichtung sind die Ränder des Lamellenausschnitts 14 durch Stege 10, 11 ausgebildet. An dem Steg 10 ist die Lasche 6 einstückig angeformt. Diese Ausführungsform der Endlamelle 4 mit Träger 15 bietet je nach Anwendungsfall Vorteile im Spannungsverlauf innerhalb der Endlamelle 4 und somit im Lamellenpaket 1.

In einer dritten Ausführungsform der Endlamelle 4, wie in Fig. 4 b) dargestellt, sind in dem Lamellenausschnitt 14 zwei ungebogene Laschen 6 am Joch 12 der Endlamelle 4 ausgebildet. Beispielsweise kann auch nur eine Lasche 6 am Joch 12 ausgebildet sein oder mehr als zwei Laschen 6. Gegenüber den Laschen 6 ist der Träger 15 der Endlamelle 4 angeordnet. Alternativ können die Laschen 6 auch am Träger 15 ausgebildet sein.

Die drei gezeigten und weiteren Ausführungsformen der Endlamelle 4, sowie die Einzellamellen 5 können beispielsweise durch Stanzverfahren hergestellt sein. Es ist auch möglich die Endlamellen 4 und Einzellamellen 5 durch weitere Herstellungsverfahren, wie zum Beispiel Laserschneiden oder Wasserstrahlschneiden, zu fertigen.

Die Figuren 5 a) bis c) und 6 a) bis c) zeigen eine erste Ausführungsform und Montageschritte zur Herstellung eines erfindungsgemäßen Lamellenpakets 1 bestehend aus dem Lamellenpaket 1, der Endlamelle 4 und dem Magneten 24. Es zeigen die Figuren 5 a) bis c) ein Schnittbild des Lamellenpakets 1 in radialer Richtung, bei denen auf die Einzeldarstellung der Einzellamellen 5 verzichtet wird und die Figuren 6 a) bis c) zeigen eine Draufsicht des Lamellenpakets 1 in axialer Richtung, bei der die Endlamelle 4 und die letzte Einzellamelle 5 dargestellt sind.

Das Lamellenpaket 1 ist, wie in Fig. 5 a) zu sehen, in einer einseitigen Ausführung 30 mit einer Endlamelle 4 als Abschluss ausgeführt, wobei die Lasche 6 über der Ausnehmung 2 angeordnet ist. Die Ausnehmung 2 weist in Umfangsrichtung Wände 22, 23 auf. Eine Biegerichtung 20 gibt an, dass in dieser ersten Ausführungsform die Lasche 6 in Richtung der Wand 22 gebogen wird.

Fig. 5 b) zeigt das Lamellenpaket 1 mit der Endlamelle 4 und einer gebogenen Lasche 6', die zur Wand 22 benachbart ist. In der Ausnehmung 2 gegenüber der Wand 22 ist eine Wand 23 angeordnet. Gebogene Laschen 6', 60' (Fig. 5 b), Fig. 7 b)) werden in der Beschreibung durch hochgestellten Häkchen (') an den Bezugszeichen gekennzeichnet.

In Fig. 5 c) ist das Lamellenpaket 1 mit der Endlamelle 4 und einem gefügten Magneten 24 dargestellt. Der Magnet 24 ist in der Ausnehmung 2 zwischen der gebogenen Lasche 6' und der Wand 23 angeordnet, wobei er vorzugsweise in Fügerichtung 25 in die Ausnehmung (2) geschoben wird. Zwischen der Lasche 6' und dem Magneten 24 befindet sich eine Wirkfläche 26, an der Klemmkräfte auftreten. Die Klemmkräfte entstehen durch das Zurückfedern der Lasche 6' in Richtung der Ausnehmung 2 und drücken den Magneten 24 in der Ausnehmung 2 gegen die Wand 23 des Lamellenpakets 1 und halten ihn in Position.

Fig. 6 a) zeigt eine Draufsicht auf die Einzellamelle 5 des Lamellenpakets 1 mit der Ausnehmung 2. In Fig. 6 b) ist die Endlamelle 4 mit der Lasche 6 dargestellt, die über der Ausnehmung 2 angeordnet ist. Fig. 6 c) zeigt die in die Ausnehmung 2 gebogene Lasche 6' der Endlamelle 4. Die Endlamelle 4 kann in Dicke und/oder Material von den Einzellamellen 5 des Lamellenpakets 1 abweichen, um eine bestmögliche Klemmkraft auf den Magneten 24 zu erzielen.

Alternativ zu der oben beschriebenen Montagereihenfolge ist es auch möglich die Lasche 6, 6' zu biegen, bevor die Endlamelle 4 auf das Lamellenpaket 1 gefügt wird. In einer Ausgestaltungen der ersten Ausführungsform kann die Endlamelle 4 auch so an dem Lamellenpaket 1 angeordnet sein, dass sich die Lasche 6, 6' auf der Seite der Wand 23 des Lamellenpakets 1 befindet. Des Weiteren kann in einer weiteren Ausgestaltung der ersten Ausführungsform die Endlamelle 4 auf der anderen Seite des Lamellenpakets 1 angeordnet sein, wobei sich die Laschen 6, 6'jeweils an den Wänden 22, 23 anordnen lassen.

Eine zweite Ausführungsform des Lamellenpakets 1, sowie eine mögliche Montagereihenfolge zeigen die Schnittbilder der Figuren 7 a) bis c). Das Lamellenpaket 1 ist in einer beidseitigen Ausführung 31 dargestellt, wobei zwei Endlamellen 4, 40 den Abschluss bilden. Die Endlamellen 4, 40 können zum Beispiel per Stanz- oder Schweißverfahren mit dem Lamellenpaket 1 befestigt sein.

Fig. 7 a) zeigt das Lamellenpaket 1 mit einer ersten Endlamelle 4 auf der einen und einer zweiten Endlamelle 40 auf der anderen Seite. An der ersten Endlamelle 4 ist eine erste Lasche 6 angeformt, die über der Ausnehmung 2 angeordnet ist. An der zweiten Endlamelle 40 ist eine zweite Lasche 60 angeformt, die der ersten Lasche 6 gegenüber angeordnet ist. Zwischen den Laschen 6, 60 befindet sich die Ausnehmung 2. Eine erste Biegerichtung 20 gibt an, in welche Richtung die erste Lasche 6 gebogen wird und eine zweite Biegerichtung 21 gibt an, in welche Richtung die zweite Lasche 60 gebogen wird. In dieser Darstellung geben die Biegerichungen 20, 21 an, dass die Laschen 6, 60 in Richtung einer Wand 22 in der Ausnehmung 2 gebogen werden. Gegenüber der Wand 22 ist eine Wand 23 angeordnet.

Das Lamellenpaket 1 mit den zwei Endlamellen 4, 40 ist in Fig. 7 b) dargestellt, wobei eine erste gebogene Lasche 6' der ersten Endlamelle 4 zwischen der Wand 22 und einer zweiten gebogenen Lasche 60' der zweiten Endlamelle 40 liegt. Um die Laschen 6', 60' so zu positionieren, wurde zuerst die erste Lasche 6' gebogen und danach die zweite Lasche 60'.

Die Fig. 7 c) zeigt das Lamellenpaket 1 mit einem gefügten Magneten 24, der in dieser Ausführungsform bevorzugt in einer Fügerichtung 25 in die Ausnehmung 2 geschoben wurde. Der Magnet 24 ist zwischen der Wand 23 und der zweiten Lasche 60' angeordnet. Die Laschen 6', 60' liegen zwischen dem Magneten 24 und der Wand 22, wobei die erste Lasche 6' zur Wand 22 benachbart und die Lasche 60' zum Magneten 24 benachbart ist. Zwischen dem Magneten 24 und der Lasche 60' befindet sich eine Wirkfläche 26, an der Klemmkräfte auftreten. Die Klemmkräfte entstehen durch das Zurückfedern der ersten Lasche 6' gegen die Lasche 60' und das Zurückfedern der zweiten Lasche 60' in Richtung der Ausnehmung 2. Der Magnet 24 wird somit gegen die Wand 23 gedrückt und in der Ausnehmung 2 des Lamellenpakets 1 in Position gehalten.

Eine vierte Ausführungsform des Lamellenpakets 1, sowie eine mögliche Montagereihenfolge, ist in den Figuren 8 a) bis c) dargestellt.

Fig. 8 a) zeigt das Lamellenpaket 1 mit einer ersten Endlamelle 4 auf der einen und einer zweiten Endlamelle 40 auf der anderen Seite. An der ersten Endlamelle 4 ist eine erste Lasche 6 angeformt, die über der Ausnehmung 2 angeordnet ist. Eine erste Biegerichtung 20 gibt an, dass die erste Lasche 6 in Richtung einer Wand 22 gebogen wird. An der zweiten Endlamelle 40 ist eine zweite Lasche 60 angeformt. Eine zweite Biegerichtung 21 gibt an, dass die zweite Lasche 60 in Richtung einer Wand 23 gebogen wird. Die Wände 22, 23 liegen sich in der Ausnehmung 2 gegenüber.

Das Lamellenpaket 1 mit den zwei Endlamellen 4, 40 ist in Fig. 8 b) dargestellt, wobei eine erste gebogene Lasche 6' der ersten Endlamelle 4 zu der Wand 22 benachbart ist und eine zweite gebogene Lasche 60' der zweiten Endlamelle 40 zu der Wand 23 benachbart ist.

Die Fig. 8 c) zeigt das Lamellenpaket 1 mit einem gefügten Magneten 24. Der Magnet 24 kann sowohl von der Seite der Endlamelle 4 als auch von der Seite der Endlamelle 40 gefügt werden. Der Magnet 24 ist zwischen der ersten Lasche 6' und der zweiten Lasche 60' in der Ausnehmung 2 angeordnet. Zwischen dem Magneten 24 und der Lasche 6' befindet sich eine erste Wirkfläche 26, an der Klemmkräfte auftreten, die durch das Zurückfedern der ersten Lasche 6' in Richtung der Ausnehmung 2 gegen den Magneten 24 entstehen. Auf der anderen Seite des Magneten 24 befindet sich eine zweite Wirkfläche 27, an der ebenso Klemmkräfte auftreten, die durch das Zurückfedern der zweiten Lasche 60' in Richtung der Ausnehmung 2 entstehen. Die Klemmkräfte an den beiden Wirkflächen 26, 27 halten den Magneten 24 in der Ausnehmung 2 in Position.

Eine weitere nicht dargestellte Ausführungsform des Lamellenpakets 1 weist beispielsweise ein oder zwei Endlamellen 4, 40 auf, an denen jeweils 2 Laschen 6, 6', 60, 60' angeformt sind. In einer möglichen Variante dieser Ausführungsform mit nur einer Endlamelle 4, 40 ist der Magnet 24 zwischen den beiden Laschen 6', 60' angeordnet und die Laschen 6', 60' sind jeweils zu den Wänden 22, 23 benachbart. Eine weitere mögliche Variante dieser Ausführungsform ist ein Lamellenpaket 1 mit zwei Endlamellen 4, 40 mit jeweils zwei Laschen 6, 6', 60, 60'. Bei dieser Variante liegen zwischen dem Magneten 24 und den Wänden 22, 23 jeweils zwei Laschen 6', 60', die durch das Zurückfedern in Richtung der Ausnehmung 2 Klemmkräfte erzeugen und den Magneten in Position halten.

Die Fixierung der Magnete 24 in den Ausnehmungen 2 durch die beschriebenen Klemmkräfte kann zusätzlich durch Stoff-, Reib- oder Formschlussverbindungen wie zum Beispiel Kleben, Kunstharzdurchtränken, Kunststoffumspritzen oder anderen mechanischen Mitteln unterstützt werden, um den im Betrieb auftretenden mechanischen und thermischen Belastungen standzuhalten.

In einer möglichen Ausführungsform sind die Magnete 24 (auch Permanentmagnete genannt) aus Neodym-Magnet gebildet und zeichnen sich durch eine starke Haftwirkung aus.

## Patentansprüche

1. Lamellenpaket (1) eines Rotors einer elektrischen Maschine, bestehend aus wenigstens zwei Einzellamellen (5) mit über den Umfang verteilten Ausnehmungen (2) zur Aufnahme von Magneten (24), wobei an mindestens einer Seite des Lamellenpakets (1) eine Endlamelle (4, 40) angeordnet ist, die mit wenigstens einer Lasche (6, 6', 60, 60') zum Eingriff in eine der Ausnehmungen (2) versehen ist, **dadurch gekennzeichnet, dass** die Lasche (6, 6', 60, 60') derart gebogen ist, dass sie axial nach innen in die Ausnehmung (2) eingreift.

2. Lamellenpaket (1) nach einem der vorangehenden Ansprüche, **dadurch gekennzeichnet, dass** an beiden Seiten des Lamellenpakets (1) jeweils eine Endlamelle (4, 40) vorgesehen ist, deren wenigstens eine Lasche (6, 6', 60, 60') derart gebogen ist, dass jeweils nach Fügen des Magneten (24) in die Ausnehmung (2) eine ersten Lasche (6') einer ersten Endlamelle (4) zu einer Wand (22) des Lamellenpakets (1) benachbart ist und eine zweite Lasche (60') einer zweiten Endlamelle (40) zwischen der ersten Lasche (6') und dem Magneten (24) liegt.

3. Lamellenpaket (1) nach einem der Ansprüche 1 oder 2, **dadurch gekennzeichnet, dass** an beiden Seiten des Lamellenpakets (1) jeweils eine Endlamelle (4, 40) vorgesehen ist, deren wenigstens eine Lasche (6, 6', 60, 60') derart gebogen ist, dass jeweils nach Fügen des Magneten (24) in die Ausnehmung (2) eine ersten Lasche (6') einer ersten Endlamelle (4) zu einer Wand (22) des Lamellenpakets (1) benachbart ist und eine zweite Lasche (60') einer zweiten Endlamelle (40) zu einer Wand (23) des Lamellenpakets (1) benachbart ist.

4. Lamellenpaket (1) nach einem der vorangehenden Ansprüche, **dadurch gekennzeichnet, dass** die Laschen (6, 6', 60, 60') der Endlamelle (4, 40) jeweils zwischen zwei Stegen (10, 11) angeordnet sind, wobei die Stege (10, 11) in Umfangsrichtung über ein radial innenliegendes Joch (12) miteinander verbunden sind.

5. Lamellenpaket (1) nach Anspruch 4, **dadurch gekennzeichnet, dass** die zwei Stege (10, 11) zusätzlich über einen radial außenliegenden Träger (15) verbunden sind, so dass die Endlamellen (4, 40) einen geschlossenen Außenumfang (16) haben.

6. Lamellenpaket (1) nach einem der vorangehenden Ansprüche, **dadurch gekennzeichnet, dass** die Anzahl der Laschen (6, 6', 60, 60') der Endlamelle (4, 40) gleich der Anzahl der Ausnehmungen (2) des Lamellenpakets (1) ist.

7. Lamellenpaket (1) nach einem der vorangehenden Ansprüche, **dadurch gekennzeichnet, dass** die Laschen (6, 6', 60, 60') der Endlamelle (4, 40) in Umfangsrichtung die gleiche Verteilung und die gleichen Abstände aufweisen, wie die Ausnehmungen (2) des Lamellenpakets (1).

8. Lamellenpaket (1) nach einem der vorangehenden Ansprüche, **dadurch gekennzeichnet, dass** die Laschen (6, 6', 60, 60') einstückig an der Endlamelle (4, 40) angeformt sind.

9. Lamellenpaket (1) nach einem der vorangehenden Ansprüche, **dadurch gekennzeichnet, dass** die Laschen (6, 6', 60, 60') derart gebogen sind, dass nach dem Fügen der Magnete (24) in die Ausnehmungen (2) an Wirkflächen (14) zwischen den Laschen (6', 60') und den Magneten (24) eine Klemmkraft besteht.

## Claims

1. Laminated core (1) of a rotor of an electrical machine, comprising at least two individual laminations (5) with recesses (2), which are distributed over the circumference, for receiving magnets (24), wherein an end lamination (4, 40) is arranged on at least one side of the laminated core (1), which end lamination is provided with at least one lug (6, 6', 60, 60') for engaging into one of the recesses (2), **characterized in that** the lug (6, 6', 60, 60') is bent in such a way that it engages axially inwards into the recess (2).

2. Laminated core (1) according to one of the preceding claims, **characterized in that** an end lamination (4, 40) is provided on each of the two sides of the laminated core (1), the at least one lug (6, 6', 60, 60') of the said end laminations being bent in such a way that, in each case after insertion of the magnet (24) into the recess (2), a first lug (6') of a first end lamination (4) is adjacent to a wall (22) of the laminated core (1), and a second lug (60') of a second end lamination (40) is situated between the first lug (6') and the magnet (24).

3. Laminated core (1) according to either of Claims 1 and 2, **characterized in that** an end lamination (4, 40) is provided on each of the two sides of the laminated core (1), the at least one lug (6, 6', 60, 60') of the said end laminations being bent in such a way that, in each case after insertion of the magnet (24) into the recess (2), a first lug (6') of a first end lamination (4) is adjacent to a wall (22) of the laminated core (1), and a second lug (60') of a second end lamination (40) is adjacent to a wall (23) of the laminated core (1).

4. Laminated core (1) according to one of the preceding claims, **characterized in that** the lugs (6, 6', 60, 60') of the end lamination (4, 40) are each arranged between two webs (10, 11), wherein the webs (10, 11) are connected to one another by means of a radially inner yoke (12) in the circumferential direction.

5. Laminated core (1) according to Claim 4, **characterized in that** the two webs (10, 11) are additionally connected by means of a radially outer support (15), so that the end laminations (4, 40) have a closed outer circumference (16).

6. Laminated core (1) according to one of the preceding claims, **characterized in that** the number of lugs (6, 6', 60, 60') of the end lamination (4, 40) is equal to the number of recesses (2) in the laminated core (1).

7. Laminated core (1) according to one of the preceding claims, **characterized in that** the lugs (6, 6', 60, 60') of the end lamination (4, 40) have the same distribution and the same distances as the recesses (2) of the laminated core (1) in the circumferential direction.

8. Laminated core (1) according to one of the preceding claims, **characterized in that** the lugs (6, 6', 60, 60') are integrally formed on the end lamination (4, 40).

9. Laminated core (1) according to one of the preceding claims, **characterized in that** the lugs (6, 6', 60, 60') are bent in such a way that, after insertion of the magnets (24) into the recesses (2), a clamping force is produced on active surfaces (14) between the lugs (6', 60') and the magnets (24).

## Revendications

1. Ensemble de lamelles (1) d'un rotor d'une machine électrique, composé d'au moins deux lamelles individuelles (5) avec des découpes (2) réparties sur la circonférence, destinées à recevoir des aimants (24), dans lequel, sur au moins un côté de l'ensemble de lamelles (1), se trouve une lamelle, d'extrémité (4, 40) qui est dotée d'au moins une patte (6, 6', 60, 60') destinée à s'engager dans l'une des découpes (2), **caractérisé en ce que** la patte (6, 6', 60, 60') est incurvée de manière à s'engager axialement vers l'intérieur dans la découpe (2).

2. Ensemble de lamelles (1) selon l'une quelconque des revendications précédentes, **caractérisé en ce que**, sur les deux côtés de l'ensemble de lamelles (1), il est respectivement prévu une lamelle d'extrémité (4, 40) dont au moins une patte (6, 6', 60, 60') est incurvée de manière à ce que, après l'assemblage respectif de l'aimant (24) dans la découpe (2), une première patte (6') d'une première lamelle d'extrémité (4) soit adjacente à une paroi (22) de l'ensemble de lamelles (1) et à ce qu'une deuxième patte (60') d'une deuxième lamelle d'extrémité (40) soit située entre la première patte (6') et l'aimant (24).

3. Ensemble de lamelles (1) selon l'une quelconque des revendications 1 ou 2, **caractérisé en ce que**, sur les deux côtés de l'ensemble de lamelles (1), il est respectivement prévu une lamelle d'extrémité (4, 40) dont au moins une patte (6, 6', 60, 60') est incurvée de manière à ce que, après l'assemblage respectif de l'aimant (24) dans la découpe (2), une première patte (6') d'une première lamelle d'extrémité (4) soit adjacente à une paroi (22) de l'ensemble de lamelles (1) et à ce qu'une deuxième patte (60') d'une deuxième lamelle d'extrémité (40) soit adjacente à une paroi (23) de l'ensemble de lamelles (1).

4. Ensemble de lamelles (1) selon l'une quelconque des revendications précédentes, **caractérisé en ce que** les pattes (6, 6', 60, 60') de la lamelle d'extrémité (4, 40) sont respectivement disposées entre deux entretoises (10, 11), dans lequel les entretoises (10, 11) sont reliées l'une à l'autre dans la direction circonférentielle par l'intermédiaire d'un étrier (12) situé radialement vers l'intérieur.

5. Ensemble de lamelles (1) selon la revendication 4, **caractérisé en ce que** les deux entretoises (10, 11) sont en outre reliées par l'intermédiaire d'un support (15) situé radialement vers l'extérieur de manière à ce que les lamelles d'extrémité (4, 40) présentent une périphérie extérieure fermée (16).

6. Ensemble de lamelles (1) selon l'une quelconque des revendications précédentes, **caractérisé en ce que** le nombre des pattes (6, 6', 60, 60') de la lamelle d'extrémité (4, 40) est égal au nombre des découpes (2) des ensembles de lamelles (1).

7. Ensemble de lamelles (1) selon l'une quelconque des revendications précédentes, **caractérisé en ce que** les pattes (6, 6', 60, 60') de la lamelle d'extrémité (4, 40) présentent la même répartition et les mêmes espacements, dans la direction circonférentielle, que les découpes (2) de l'ensemble de lamelles (1).

8. Ensemble de lamelles (1) selon l'une quelconque des revendications précédentes, **caractérisé en ce que** les pattes (6, 6', 60, 60') sont formées d'un seul tenant sur la lamelle d'extrémité (4, 40).

9. Ensemble de lamelles (1) selon l'une quelconque des revendications précédentes, **caractérisé en ce que** les pattes (6, 6', 60, 60') sont incurvées de manière à ce qu'après l'assemblage des aimants (24) dans les découpes (2), une force de serrage s'exerce sur des surfaces actives (14) entre les pattes (6', 60') et les aimants (24).
